# EUROPÄISCHE PATENTSCHRIFT

(11) **EP 3 230 107 B1**
(45) Veröffentlichungstag und Bekanntmachung des Hinweises auf die Patenterteilung: **14.04.2021**
(21) Anmeldenummer: 15808239.6
(22) Anmeldetag: 11.12.2015
(51) Int. Cl.: B60K 6/365, B60K 6/46, B60K 6/547, F16H 3/72, B60K 6/48

(54) **ANTRIEBSVORRICHTUNG FÜR EIN HYBRIDGETRIEBENES KRAFTFAHRZEUG**
DRIVE DEVICE FOR A HYBRID-DRIVE MOTOR VEHICLE
DISPOSITIF D'ENTRAÎNEMENT D'UN VÉHICULE AUTOMOBILE HYBRIDE

(30) Priorität: 12.12.2014 DE 102014018463
(43) Veröffentlichungstag der Anmeldung: 18.10.2017
(73) Patentinhaber: Audi AG, 85045 Ingolstadt (DE)
(72) Erfinder: SCHOLLE, Tassilo, 85051 Ingolstadt (DE); WIRTH, Christian, 85737 Moosinning/Eichenried (DE); BRUMMER, Simon, 82194 Gröbenzell (DE)
(74) Vertreter: Lehle, Josef
(86) Internationale Anmeldenummer: PCT/EP2015/079473
(87) Internationale Veröffentlichungsnummer: WO 2016/092089

(56) Entgegenhaltungen:
- WO-A1-2014/040689
- DE-A1-102006 060 402
- DE-A1-102013 006 030
- US-B1- 8 905 892

## Beschreibung

Die vorliegende Erfindung betrifft eine Antriebsvorrichtung für ein hybridgetriebenes Kraftfahrzeug nach dem Oberbegriff des Patentanspruchs 1.

Eine Antriebsvorrichtung für ein hybridgetriebenes Kraftfahrzeug beschreibt die AT 51 35 38 A1, bei der eine Brennkraftmaschine und eine Elektromaschine auf ein gemeinsames Getriebe abtreiben, wobei das Getriebe durch einen als Minusgetriebe ausgelegten Planetenradsatz und einen damit über Kupplungen und Bremsen gekoppelten Ravigneauxsatz gebildet ist. Die Antriebsvorrichtung kann verbrennungsmotorisch und elektromotorisch in drei Übersetzungsstufen (Gängen) und im Hybridantrieb leistungsverzweigt in zwei stufenlosen Übersetzungsbereichen betrieben werden.

Eine weitere Antriebsvorrichtung für ein hybridgetriebenes Kraftfahrzeug ist aus der US 8,905,892 B1 bekannt, bei der eine Brennkraftmaschine über zwei Stirnradtriebe und eine Elektromaschine über einen weiteren Stirnradtrieb auf ein aus zwei Planetenradsätzen bestehendes Getriebe abtreiben. Eine Abtriebswelle des Getriebes ist fest mit miteinander gekoppelten Stegen der Planetenradsätze verbunden. Die Antriebsvorrichtung enthält zwei Kupplungen und eine Bremse, über die verbrennungsmotorische, elektromotorische und hybridische Betriebsmoden eingestellt werden können.

Die Aufgabe der Erfindung besteht darin, eine Antriebsvorrichtung bereitzustellen, mittels der in erweitertem Maße unterschiedliche Antriebsmodi steuerbar sind und die baulich und im Wirkungsgrad vorteilhaft ausgebildet ist.

Die Aufgabe ist durch die Merkmale des Patentanspruchs 1 gelöst. Vorteilhafte Weiterbildungen und Ausgestaltungen der Antriebsvorrichtung sind Gegenstand der Unteransprüche.

Erfindungsgemäß wird vorgeschlagen, dass im verbrennungsmotorischen Betrieb bis zu sechs Übersetzungsstufen (V1 bis V6) schaltbar sind und dass über die Elektromaschine EM durch generatorische oder motorische Überlagerung in den Planetengetrieben zumindest in zwei Übersetzungsstufen ein stufenloser Antrieb (CVT 1, CVT2) steuerbar ist. Neben den bekannten Antriebsmodi wird somit ein weiterer Fahrmodus geschaffen, mit dem ein stufenloser Betrieb des Kraftfahrzeugs im verbrennungsmotorischen Betrieb steuerbar ist. Dies ist insbesondere aus Effizienzgründen und/oder Komfortgründen von besonderem Vorteil. Bei entsprechender Verknüpfung der Planetengetriebe ist abgesehen von der Ansteuerung der Elektromaschine kein wesentlicher, baulicher Mehraufwand erforderlich. Es kann beispielsweise ein stufenloser Fahrbetrieb gesteuert sein, bei dem die Anfahrübersetzung durch negative Drehzahl der Elektromaschine sehr niedrig, durch Drehzahl 0 erhöht und durch positive Drehzahlsteuerung der Elektromaschine stufenlos in eine Anfahrhöchstübersetzung (CVT1) gesteuert wird. Gleiches gilt zum Beispiel für einen zweiten, höheren Übersetzungsbereich (CVT2), der stufenlos im Übersetzungsbereich von einem 4. Gang bis zu einem 6.Gang steuerbar ist. Damit sind zum Beispiel gezielte Einstellungen von Lastpunkten an der Brennkraftmaschine und/oder an der Elektromaschine möglich, verbunden mit einer verbesserten Fahrdynamik des Kraftfahrzeugs, abhängig von vorliegenden und/oder vorgegebenen Betriebsparametern.

Des Weiteren können im verbrennungsmotorischen Betrieb auch feste Ubersetzungsverhältnisse durch Festbremsen der Elektromaschine steuerbar sein, um zum Beispiel definierte Betriebspunkte der Brennkraftmaschine im stufenlosen Betriebsbereich zu halten.

Im elektromotorischen Betrieb sind drei vom Primärantrieb unabhängige Gänge schaltbar. Dabei ist mindestens ein Gang als Anfahrgang nutzbar.

In einer vorteilhaften Weiterbildung der Erfindung wird vorgeschlagen, dass die Antriebsvorrichtung durch ein zumindest zweiwelliges Getriebe mit zwei Drei-Wellen-Planetengetrieben gebildet wird, mittels dem die Fahrmodi bei relativ geringem getriebetechnischen Aufwand verwirklichbar sind.

Die Erfindung sieht vor, dass die Brennkraftmaschine über eine erste Eingangswelle und einen ersten Stirnradtrieb mit zwei achsparallel gelagerten, miteinander gekoppelten Planetengetrieben und die Elektromaschine über eine zweite achsparallele Eingangswelle mit den Planetengetrieben trieblich verbunden ist, wobei ein Ausgangselement der Planetengetriebe auf die gemeinsame Abtriebswelle geschaltet ist.

Dabei sind die sechs Vorwärtsgänge des verbrennungsmotorischen Betriebs und drei Vorwärtsgänge (E1 bis E3) im elektromotorischen Betrieb baulich und steuerungstechnisch über nur drei Kupplungen und eine Bremse schaltbar. Die Kupplungen können bevorzugt hydraulisch gesteuerte Lamellenkupplungen, gegebenenfalls aber auch durch formschlüssige Klauenkupplungen gebildet sein. Gleiches gilt für die technische Auslegung der Bremse.

Im Sinne einer baulich einfachen, kompakten Konstruktion ist die Abtriebswelle erfindungsgemäß mittelbar oder unmittelbar fest mit den beiden Stegen, die jeweils die Summenwelle der Planetengetriebe sind, als Ausgangselemente der Planetengetriebe trieblich verbunden. Ferner ist das Sonnenrad des zweiten Planetengetriebes mit dem Außenrad des ersten Planetengetriebes über die Kupplung K1 kuppelbar, während das Außenrad des zweiten Planetengetriebes über einen zweiten Stirnzahnradtrieb mit der Eingangswelle der Brennkraftmaschine unmittelbar gekoppelt ist.

Gemäß der Erfindung ist das Außenrad des ersten Planetengetriebes über die Bremse B1 festbremsbar oder über die Kupplung K3 mit dem ersten Stirnradtrieb der Antriebsvorrichtung kuppelbar. Vorzugsweise ist das Sonnenrad des ersten Planetengetriebes über die Eingangswelle mittelbar oder unmittelbar mit der Elektromaschine (EM) trieblich verbunden und kann zudem über eine Kupplung K2 zwischen der Eingangswelle und dem Steg mit dem Steg koppelbar sein.

Schließlich kann in einer besonders bevorzugten Verknüpfung der Getriebeelemente der beiden Planetengetriebe das Sonnenrad des ersten Planetengetriebes über die korrespondierende Eingangswelle mittelbar oder unmittelbar mit der Elektromaschine trieblich verbunden und ferner über eine Kupplung K2 zwischen der Eingangswelle und dem Steg mit dem Steg koppelbar sein.

Die Elektromaschine kann des Weiteren entweder direkt oder aus räumlichen und/oder Übersetzungsverhältnisse betreffenden Gründen über einen weiteren Stirnradtrieb auf die korrespondierende Eingangswelle geschaltet sein.

Alternativ zu einer herkömmlichen Elektromaschine kann diese ringförmig und radial um die beiden Planetengetriebe herum angeordnet sein, wobei deren Rotor über eine Flanschverbindung unmittelbar auf die Eingangswelle des ersten Planetengetriebes abtreibt. Daraus resultiert eine baulich besonders kurze, sehr kompakte Konstruktion der Antriebsvorrichtung.

Des Weiteren kann die Brennkraftmaschine in an sich bekannter Weise über eine Anfahrkupplung K0 und gegebenenfalls über einen Drehschwingungsdämpfer mit der Getriebe-Eingangswelle trieblich verbindbar sein. Die Kupplungen K0, K3 und die Bremse B1 können zudem baulich vorteilhaft einerseits der beiden Planetengetriebe und die Kupplung K2 andererseits positioniert sein.

Schließlich kann zur Erzielung eines Allradantriebs des Kraftfahrzeugs die Abtriebswelle der Antriebsvorrichtung als Hohlwelle ausgeführt sein, die auf ein Zwischenachsdifferenzial (MD) abtreibt, dessen Ausgangswellen mit einem vorderen und einem hinteren Achsdifferenzial des Kraftfahrzeugs trieblich verbindbar sind.

Mehrere Ausführungsbeispiele der Erfindung sind anhand der beigefügten Zeichnung näher erläutert. Es zeigen:
- Fig. 1: ein Blockschaltbild einer Hybridantriebsvorrichtung für Kraftfahrzeuge, mit einer Brennkraftmaschine und einer Elektromaschine, die über zwei miteinander gekoppelte, achsparallel angeordnete Planetengetriebe auf eine gemeinsame Abtriebswelle abtreiben;
- Fig. 2: eine Schaltmatrix der Antriebsvorrichtung, die in bis zu sechs verbrennungsmotorische Vorwärtsgänge sowie drei elektrischen Gängen schaltbar ist, wobei zwei der verbrennungsmotorischen Gänge stufenlos steuerbar sind;
- Fig. 3: eine Antriebsvorrichtung nach Fig. 1, bei der die Elektromaschine direkt auf die Planetengetriebe geschaltet ist;
- Fig. 4: eine zu den Fig. 1 und Fig. 3 alternative Antriebsvorrichtung, bei der die Elektromaschine ringförmig um die Planetengetriebe herum angeordnet ist; und
- Fig. 5: eine zur Fig. 4 alternative Antriebsvorrichtung für Allrad getriebene Kraftfahrzeuge mit einem integrierten Mittendifferenzial und zwei Getriebe-Ausgangswellen.

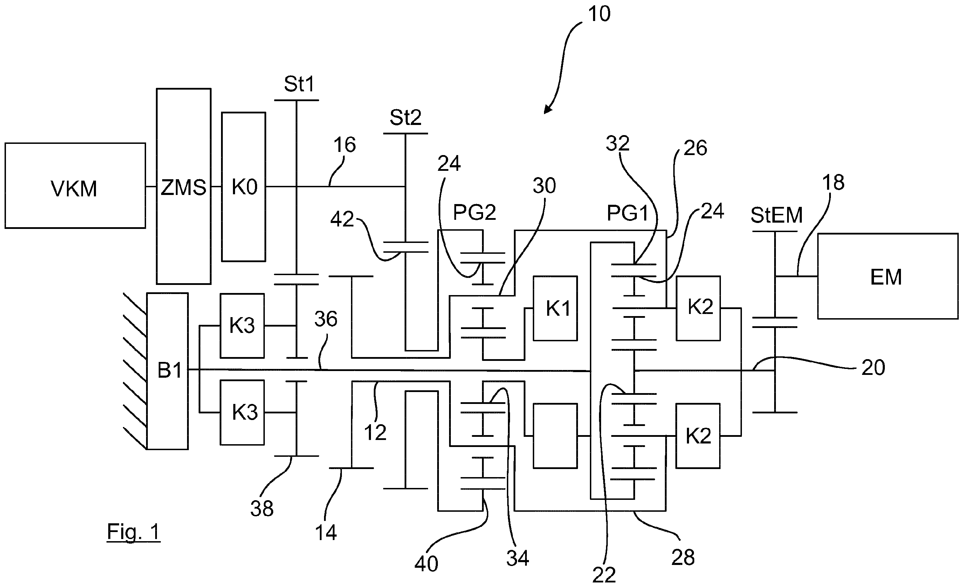

Die in der Fig. 1 dargestellte Antriebsvorrichtung 10 für ein hybridgetriebenes Kraftfahrzeug weist eine Verbrennungskraftmaschine VKM einerseits und eine Elektromaschine EM anderseits als Antriebsquellen auf, die separat oder gemeinsam aktivierbar sind und die über zwei einfache Planetengetriebe PG1 und PG2 auf eine gemeinsame Abtriebswelle 12 abtreiben. Der weitere Antriebsstrang zum Antrieb beispielsweise der Vorderräder des Kraftfahrzeugs kann bekannter Bauart sein und ist deshalb nicht weiter dargestellt.

Die VKM wirkt über einen Drehschwingungsdämpfer (zum Beispiel ein Zweimassenschwungrad ZMS) und über eine Anfahrkupplung K0 auf eine Eingangswelle 16.

Die Eingangswelle 16 ist mittels eines ersten Stirnzahnradtriebs ST1 über die Kupplung K3 in noch zu beschreibender Weise mit den beiden achsparallel in einem nicht dargestellten Getriebegehäuse gelagerten zwei dreiwelligen Planetengetrieben PG1, PG2 trieblich verbunden.

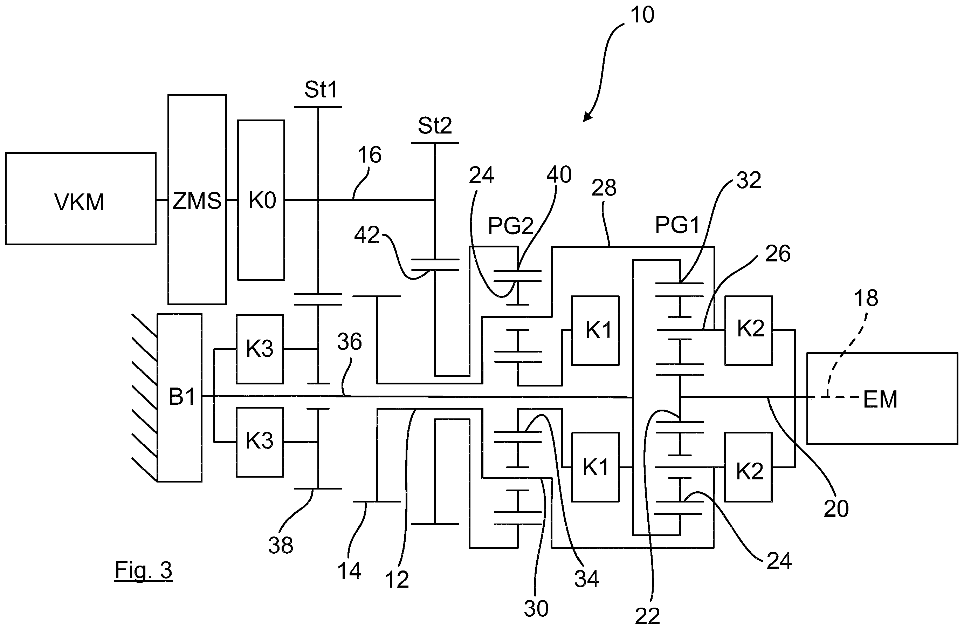

Die achsparallel zur Abtriebswelle 12 positionierte Elektromaschine EM treibt über deren Antriebswelle 18, einen dritten Stirnzahnradsatz StEM und eine zweite Eingangswelle 20 auf die beiden Planetengetriebe PG1, PG2 ab. Alternativ kann die EM auch direkt auf die Eingangswelle 20 abtreiben (Fig. 3).

Die über den Stirnradtrieb St1 und einem zweiten Stirnradtrieb St2 von der VKM angetriebenen Planetengetriebe PG1, PG2 sind wie folgt miteinander gekoppelt:
Die von der EM angetriebene Eingangswelle 20 ist mit dem Sonnenrad 22 des Planetengetriebes PG1 verbunden und kann mittels der Kupplung K2 mit dem Planetenräder 24 tragenden Steg 26 des PG 1 gekoppelt werden.

Der Steg 26 ist über eine Antriebsverbindung 28 fest mit dem ebenfalls Planetenräder 24 tragenden Steg 30 des axial unmittelbar benachbarten Planetengetriebes PG2 und dieser mit der als Hohlwelle ausgeführten Abtriebswelle 12 zusammengeschaltet.

Ferner ist das mit den Planetenrädern 24 kämmende Außenrad 32 des Planetengetriebes PG1 über die integrierte Kupplung K1 mit dem Sonnenrad 34 des Planetengetriebes PG2 kuppelbar. Das Außenrad 32 ist zudem über eine zentrische Welle 36 über eine im Getriebegehäuse vorgesehene Bremse B1 festbremsbar oder über die Kupplung K3 mit dem angetriebenen Zahnrad 38 des ersten Stirnzahnradtriebs St1 kuppelbar.

Schließlich ist das Außenrad 40 des Planetengetriebes PG2 mit dem angetriebenen Zahnrad 42 des Stirnzahnradsatzes St2 fest zusammengeschaltet.

Die Kupplungen K0, K1, K2, K3 und die Bremse B1 sind bevorzugt als Reibungskupplungen bzw. Lamellenkupplungen ausgeführt; alternativ können zumindest die Schaltelemente K3, B1 auch formschlüssig wirkend ausgebildet sein.

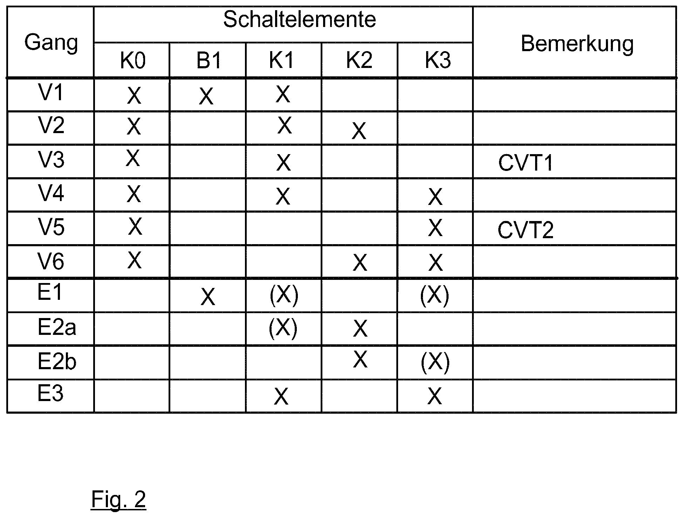

Die Fig. 2 zeigt eine beispielsweise Schaltmatrix zum Schalten der Übersetzungsstufen bzw. Gänge der Antriebsvorrichtung 10; die Kreuze geben die jeweils geschalteten bzw. aktivierten Schaltelemente K0, B1, K1, K2, K3 an. Die möglichen Vorwärtsgänge für die Brennkraftmaschine VKM sind mit V1 bis V6 und für die Elektromaschine EM mit E1 bis E3 bezeichnet. Die Kreuze in Klammern sind alternativ mögliche Verknüpfungsmöglichkeiten.

Unter der Spalte "Bemerkung" ist angeführt, in welchen Schaltzuständen die Antriebsvorrichtung zudem im stufenlosen Bereich (CVT1, CVT2) mit steuerbar angekoppelter Elektromaschine EM betreibbar ist.

Die Antriebsvorrichtung 10 kann dementsprechend mit der Brennkraftmaschine VKM in den Gängen V1 bis V6 betrieben werden. Die Elektromaschine EM kann im Leerlauf sein, als Generator zur Stromerzeugung oder aber zum Beispiel in einem Boostbetrieb gemeinsam mit der Brennkraftmaschine VKM das Kraftfahrzeug antreiben.

Ferner kann die Elektromaschine EM separat in den Gängen E1 bis E3 (E2a und E2b können das gleiche Übersetzungsverhältnis aufweisen) das Kraftfahrzeug antreiben, wobei hier die Brennkraftmaschine VKM über die geöffnete Anfahrkupplung K0 abgekuppelt ist.

In den Gängen V3 und/oder V5 kann durch entsprechende Ansteuerung der Elektromaschine EM diese überlagert den Planetengetrieben PG1, PG2 bzw. den geschalteten Gängen entweder als Generator oder als Antriebsmotor wie folgt betrieben sein:

**In V3: (CVT1)**

| | |
|---|---|
| - negative Drehzahl der E-Maschine (generatorischer Betrieb) | -> Anfahren (geared neutral) |
| - Drehzahl E-Maschine = 0 | -> 3. Gang |
| - positive Drehzahl der E-Maschine (motorischer Betrieb) | -> bis Übersetzung 4. Gang |

**In V5: (CVT2)**

| | |
|---|---|
| - positive Drehzahl der E-Maschine (generatorischer Betrieb) | -> ab Übersetzung 4. Gang |
| - Drehzahl E-Maschine = 0 | -> 5. Gang |
| - negative Drehzahl der E-Maschine (motorischer Betrieb) | -> bis Übersetzung 6. Gang |

Im elektromotorischen Betrieb ist zudem zumindest ein Rückwärtsgang R durch Drehrichtungsumkehr der Elektromaschine EM schaltbar.

Über die Fahrgeschwindigkeit können die Gänge E1 bis E3 der Elektromaschine EM oder die Gänge V1 bis V6 gemäß der Matrix nach Fig. 2 geschaltet werden. Des Weiteren können in V3 und V5 wie ersichtlich die vorstehend aufgeführten Fahrbereiche CVT1, CVT2 stufenlos als Gänge 1 bis 6 abgedeckt werden.

Über die EM können gegebenenfalls auch die Gangschaltungen im Überlagerungsbetrieb synchronisiert werden, wodurch bei entsprechender Getriebe-Steuerungsauslegung zumindest die Kupplungen K1 bis K3 und die Bremse B1 formschlüssig wirkende Kupplungselemente (Klauenkupplungen) sein können.

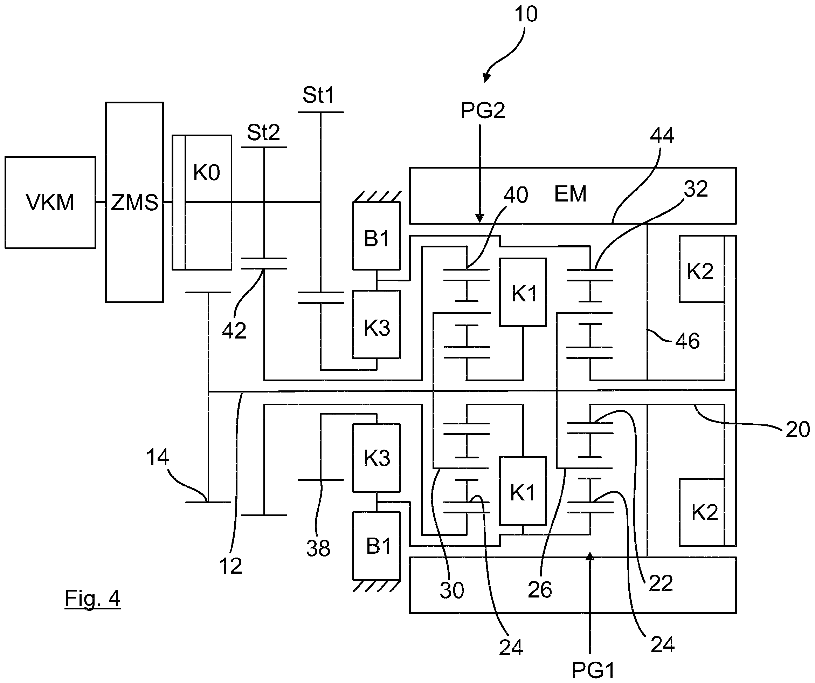

Die Fig. 4 zeigt eine zur Fig. 1 alternative Antriebsvorrichtung 10, die nur soweit beschrieben ist, als sie sich wesentlich von der Fig. 1 bzw. Fig. 3 unterscheidet. Funktionell gleiche Teile sind mit gleichen Bezugszeichen versehen.

Gemäß Fig. 4 ist eine ringförmig ausgeführte Elektromaschine EM koaxial zu den Planetengetrieben PG1, PG2 und radial um diese herum angeordnet, wobei deren Rotor 44 über einen Verbindungsflansch 46 unmittelbar auf die Eingangswelle 20 abtreibt.

Die hier als Hohlwelle ausgebildete Eingangswelle 20 ist wie vorstehend mit dem Sonnenrad 22 des Planetengetriebes PG1 fest verbunden und über die Kupplung K2 mit den beiden Stegen 26, 30 der Planetengetriebe PG1, PG2 und der hier zentrischen Abtriebswelle 12 kuppelbar.

Die Verknüpfung der Getriebeelemente mit den Kupplungen K1, K2, K3 und der Bremse B1 sind wie vorstehend zur Fig. 1 ausgeführt, wobei jedoch die Stirnradtriebe St1, St2 vertauscht und die Anordnung der Kupplungen und der Bremse wie ersichtlich in ihrer Position und Anbindung verändert sind. Die Schaltmatrix gemäß Fig. 2 ist analog anwendbar.

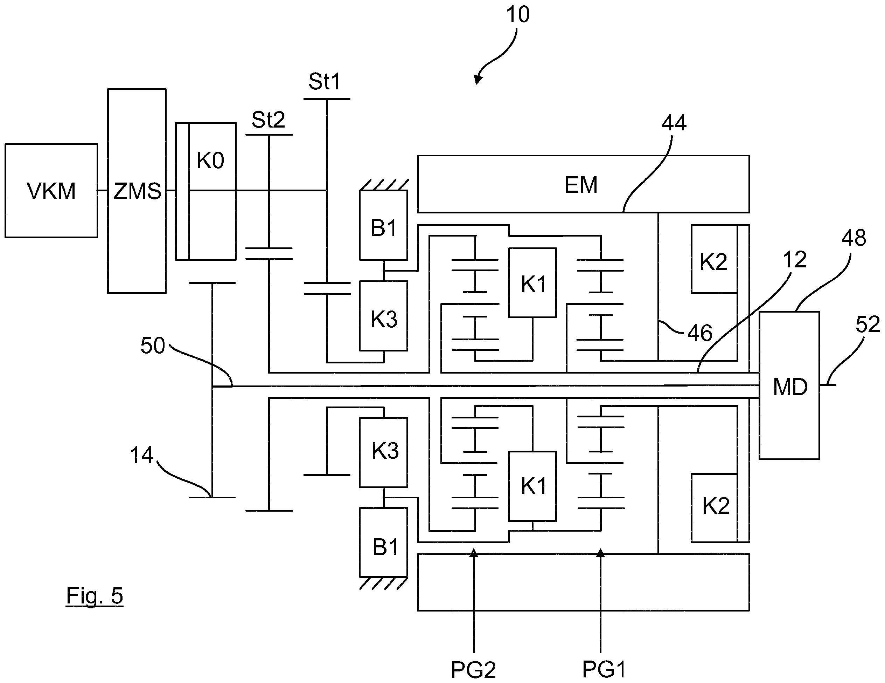

In der Fig. 5 schließlich ist eine Antriebsvorrichtung 10 für ein Allrad getriebenes Kraftfahrzeug dargestellt, die im Wesentlichen gleich der Fig. 4 ausgeführt ist; es werden nur die relevanten, getriebetechnischen Unterschiede erläutert. Funktionell gleiche Teile sind mit gleichen Bezugszeichen versehen.

Gemäß der Fig. 5 ist die Abtriebswelle 12 als Hohlwelle ausgebildet, die auf das Ausgleichsgehäuse 48 eines Zwischenachsdifferenzials (oder Mitteldifferenzials) MD abtreibt. Das Differenzial MD kann beispielsweise ein Kegelraddifferenzial bekannter Bauart oder ein anderes, bekanntes Differenzial sein.

Die Ausgangs-Halbwellen 50, 52 des Differenzials MD sind dann in nicht dargestellter Weise trieblich mit einem vorderen und einem hinteren Achsdifferenzial des Kraftfahrzeugs verbindbar. Wie ersichtlich ist, ist dabei die eine, zentrale Ausgangswelle 50 durch die Getriebeelemente und die Abtriebswelle 12 hindurchgeführt. Im Übrigen ist die Antriebsvorrichtung 10 entsprechend der Antriebsvorrichtung 10 der Fig. 4 (oder gegebenenfalls auch nach Fig. 1) ausgebildet.

Die beschriebenen Antriebsvorrichtungen 10 ermöglichen universelle Fahrmodi zum Betrieb eines Kraftfahrzeugs, insbesondere nämlich elektrisch, verbrennungsmotorisch, hybridisch und gegebenenfalls aus zum Beispiel Effizienz- und Komfortgründen im CVT Modus. Im CVT Modus sind neben einer stufenlosen Getriebesteuerung auch beliebig viele Gangabstufungen programmierbar, die abhängig von Lastanforderungen und wirkungsgradgünstigen Einstellungen steuerbar sind.

Durch Festbremsen der Elektromaschine EM (mittels einer Bremse oder generatorisch) können bei Bedarf über die Brennkraftmaschine VKM auch feste Übersetzungsverhältnisse in einem weiteren Fahrmodus gesteuert werden.

## Patentansprüche

1. Antriebsvorrichtung für ein hybridgetriebenes Kraftfahrzeug, mit einer Brennkraftmaschine (VKM) als Primärantrieb, einer Elektromaschine (EM) als Sekundärantrieb und mit zwei durch Kupplungen und Bremsen in unterschiedliche Übersetzungsstufen umschaltbaren, miteinander gekoppelten Planetengetrieben (PG1, PG2), die über Eingangselemente und Ausgangselemente mit einer gemeinsamen Abtriebswelle verbunden sind und deren Reaktionselemente kuppelbar oder festbremsbar sind, wobei die Antriebsvorrichtung in einem elektromotorischen Betrieb, einem Übersetzungsstufen (V1 bis V6) aufweisenden verbrennungsmotorischen Betrieb oder in einem Hybridantrieb betreibbar ist, wobei im verbrennungsmotorischen Betrieb bis zu sechs Übersetzungsstufen (V1 bis V6) schaltbar sind und über die Elektromaschine (EM) durch generatorische oder motorische Überlagerung in den Planetengetrieben (PG1, PG2) zumindest in zwei der Übersetzungsstufen (V3, V5) ein stufenloser Antrieb (CVT1, CVT2) steuerbar ist, wobei die Brennkraftmaschine (VKM) über eine erste Eingangswelle (16) und einen ersten Stirnradtrieb (St1) mit den zwei achsparallel gelagerten, miteinander gekoppelten Planetengetrieben (PG1, PG2) und die Elektromaschine (EM) über eine zweite achsparallele Eingangswelle (20) mit den Planetengetrieben (PG1, PG2) trieblich verbunden ist, wobei die Ausgangselemente als Stege (26, 30) der Planetengetriebe (PG1, PG2) auf die gemeinsame Abtriebswelle (12) geschaltet sind, wobei die Abtriebswelle (12) mittelbar oder unmittelbar fest mit den beiden Stegen (26, 30) als Ausgangselemente der Planetengetriebe (PG1, PG2) trieblich verbunden ist, wobei ein Außenrad (40) eines zweiten Planetengetriebes (PG2) der zwei Planetengetriebe (PG1, PG2) über einen zweiten Stirnradtrieb (St2) mit der Eingangswelle (16) der Brennkraftmaschine (VKM) unmittelbar gekoppelt ist, und wobei das Außenrad (32) eines ersten Planetengetriebes (PG1) der beiden Planetengetriebe (PG1, PG2) über eine Bremse (B1) festsetzbar ist, **dadurch gekennzeichnet, dass** sechs Vorwärtsgänge (V1 bis V6) im verbrennungsmotorischen Betrieb und drei Vorwärtsgänge (E1 bis E3) im elektromotorischen Betrieb über erste bis dritte Kupplungen (K1, K2, K3) und die Bremse (B1) schaltbar sind, dass ein Sonnenrad (34) des zweiten Planetengetriebes (PG2) mit einem Außenrad (32) des ersten Planetengetriebes (PG1) über die erste Kupplung (K1) kuppelbar ist, und dass das Außenrad (32) des ersten Planetengetriebes (PG1) über die dritte Kupplung (K3) mit dem ersten Stirnradtrieb (St1) kuppelbar ist.

2. Antriebsvorrichtung nach Anspruch 1, **dadurch gekennzeichnet, dass** die drei Vorwärtsgänge (E1 bis E3) im elektromotorischen Betrieb vom Primärantrieb unabhängig schaltbar sind, und dass mindestens einer der drei unabhängig vom Primärantrieb schaltbaren Vorwärtsgänge (E1 bis E3) als Anfahrgang nutzbar ist.

3. Antriebsvorrichtung nach Anspruch 1 oder 2, **dadurch gekennzeichnet, dass** im verbrennungsmotorischen Betrieb durch Festbremsen der Elektromaschine (EM) auch feste Übersetzungsverhältnisse (V1 bis V6) steuerbar sind.

4. Antriebsvorrichtung nach Anspruch 1, 2 oder 3, **dadurch gekennzeichnet, dass** ein zumindest zweiwelliges Getriebe (12, 16) mit den zwei als Drei-Wellen-Planetengetriebe ausgeführten Planetengetrieben (PG1, PG2) vorgesehen ist, und dass die Summenwellen, insbesondere Stege (20, 30), der beiden Drei-Wellen-Planetengetrieben (PG1, PG2) gekoppelt sind.

5. Antriebsvorrichtung nach einem der Ansprüche 1 bis 4, **dadurch gekennzeichnet, dass** ein Sonnenrad (22) des ersten Planetengetriebes (PG1) über die zweite Eingangswelle (20) mittelbar oder unmittelbar mit der Elektromaschine (EM) trieblich verbunden ist.

6. Antriebsvorrichtung nach Anspruch 5, **dadurch gekennzeichnet, dass** das Sonnenrad (22) des ersten Planetengetriebes (PG1) über die zweite Kupplung (K2) mit dem Steg (26) des ersten Planetengetriebes (PG1) kuppelbar ist.

7. Antriebsvorrichtung nach Anspruch 5, **dadurch gekennzeichnet, dass** die Elektromaschine (EM) über einen weiteren Stirnradtrieb (StEM) auf die zweite Eingangswelle (20) geschaltet ist.

8. Antriebsvorrichtung nach einem der Ansprüche 5 oder 6, **dadurch gekennzeichnet, dass** die Elektromaschine (EM) ringförmig ausgeführt ist und radial um die beiden Planetengetriebe (PG1, PG2) herum angeordnet ist, wobei deren Rotor (44) über eine Flanschverbindung (46) unmittelbar auf die zweite Eingangswelle (20) abtreibt.

9. Antriebsvorrichtung nach einem der vorhergehenden Ansprüche, **dadurch gekennzeichnet, dass** die Brennkraftmaschine (VKM) über eine Anfahrkupplung (K0) und gegebenenfalls über einen Drehschwingungsdämpfer (ZMS) mit der ersten Eingangswelle (16) trieblich verbindbar ist.

10. Antriebsvorrichtung nach Anspruch 9 **dadurch gekennzeichnet, dass** die Anfahrkupplung (KO), die dritte Kupplung (K3) und die Bremse (B1) einerseits der beiden Planetengetriebe (PG1, PG2) und die zweite Kupplung (K2) andererseits positioniert sind.

11. Antriebsvorrichtung nach einem der vorhergehenden Ansprüche, **dadurch gekennzeichnet, dass** die Abtriebswelle (12) als Hohlwelle ausgeführt ist, die auf ein Zwischenachsdifferenzial (MD) abtreibt, dessen Ausgangswellen (50, 52) mit einem vorderen und einem hinteren Achsdifferenzial des Kraftfahrzeugs trieblich verbindbar sind.

## Claims

1. Drive device for a hybrid-driven motor vehicle, with an internal combustion engine (VKM) as primary drive, an electric motor (EM) as secondary drive and with two planetary gears (PG1, PG2) coupled to one another which can be shifted by couplings and brakes into different transmission ratios, which planetary gears are connected via input element and output element to a common output drive shaft and reaction elements of which can be coupled or braked, wherein the drive device can be operated in an electric-motor mode, a combustion engine mode having transmission ratios (V1 to V6) or in a hybrid mode, wherein in the combustion engine mode up to six transmission ratios (V1 to V6) can be shifted, and an infinitely variable drive (CVT1, CVT2) can be controlled by means of the electric motor (EM) by generative or motor superpositioning in the planetary gears (PG1, PG2) at least in two of the transmission ratios (V3, V5), wherein the combustion engine (VKM) is drive connected via a first input shaft (16) and a first spur gear drive (St1) to the two axially parallel mounted, coupled planetary gears (PG1, PG2) and the electric motor (EM) is drive connected via a second axially parallel input shaft (20) to the planetary gears (PG1, PG2), wherein the output elements are shifted as bridges (26, 30) of the planetary gear (PG1, PG2) to the common output drive shaft (12), wherein the output drive shaft (12) is connected indirectly or directly securely to the two bridges (26, 30) as output elements of the planetary gear (PG1, PG2), wherein an outer gear (40) of a second planetary gear (PG2) of the two planetary gears (PG1, PG2) is coupled directly via a second spur gear drive (St2) to the input shaft (16) of the combustion engine (VKM), and wherein the outer gear (32) of a first planetary gear (PG1) of the two planetary gears (PG1, PG2) can be set by a brake (B1), **characterised in that** six forwards gears (V1 to V6) can be shifted in combustion engine mode and three forwards gears (E1 to E3) can be shifted in electric motor mode via first to third couplings (K1, K2, K3) and the brake (B1), **in that** a sun gear (34) of the second planetary gear (PG2) can be coupled to an outer gear (32) of the first planetary gear (PG1) via the first coupling (K1), and **in that** the outer gear (32) of the first planetary gear (PG1) can be coupled via the third coupling (K3) to the first spur gear drive (St1).

2. Drive device according to claim 1, **characterised in that** the three forwards gears (E1 to E3) in electric-motor mode can be shifted independently of the primary drive, and **in that** at least one of the three forwards gears (E1 to E3) shiftable independently of the primary drive can be used as starting gear.

3. Drive device according to claim 1 or 2, **characterised in that** in combustion engine mode by braking the electric motor (EM) also fixed transmission ratios (V1 to V6) can be controlled.

4. Drive device according to claim 1, 2 or 3, **characterised in that** an at least twin-shaft gear (12, 16) is provided with the two planetary gears (PG1, PG2) configured as three-shaft planetary gears, and **in that** the cumulative shafts, in particular bridges (20, 30), of both three-shaft planetary gears (PG1, PG2) are coupled.

5. Drive device according to any of claims 1 to 4, **characterised in that** a sun gear (22) of the first planetary gear (PG1) is drive connected indirectly or directly via the second input shaft (20) to the electric motor (EM).

6. Drive device according to claim 5, **characterised in that** the sun gear (22) of the first planetary gear (PG1) can be coupled via the second coupling (K2) to the bridge (26) of the first planetary gear (PG1).

7. Drive device according to claim 5, **characterised in that** the electric motor (EM) is connected via a further spur gear drive (StEM) to the second input shaft (20).

8. Drive device according to any of claims 5 or 6, **characterised in that** the electric motor (EM) is designed to be annular, and is arranged radially around the two planetary gears (PG1, PG2), wherein its rotor (44) is driven via a flange connection (46) directly to the second input shaft (20).

9. Drive device according to any of the preceding claims, **characterised in that** the internal combustion engine (VKM) can be connected via a starting coupling (K0) and if necessary via a torsional vibration damper (ZMS) to the first input shaft (16).

10. Drive device according to claim 9, **characterised in that** the starting coupling (K0) the third coupling (K3) and the brake (B1) are positioned on one side of the two planetary gears (PG1, PG2) and the second coupling (K2) on the other side.

11. Drive device according to any of the preceding claims, **characterised in that** the output drive shaft (12) is designed as a hollow shaft which outputs to an intermediate axial differential (MD), the output shafts (50, 52) of which can be drive connected to a front and a rear axial differential of the motor vehicle.

## Revendications

1. Dispositif d'entraînement moteur d'un véhicule automobile hybride comprenant un moteur à combustion interne (VKM) en tant qu'entraînement primaire, un moteur électrique (EM) en tant qu'entraînement secondaire, et deux engrenages planétaires (PG1, PG2) couplés l'un à l'autre, qui peuvent être basculés dans différents rapports de transmission par des embrayages et des freins, lesquels engrenages planétaires sont raccordés à un arbre d'entraînement commun par l'intermédiaire d'éléments d'entrée et d'éléments de sortie, et dont les éléments de réaction peuvent être couplés ou bloqués, dans lequel le dispositif d'entraînement peut fonctionner dans un entraînement par moteur électrique, dans un entraînement par moteur à combustion présentant des rapports de transmission (V1 à V6) ou dans un entraînement hybride, dans lequel, dans l'entraînement par moteur à combustion, jusqu'à six rapports de transmission (V1 à V6) peuvent être commutés, et un entraînement à variation continue (CVT1, CVT2) dans au moins deux rapports de transmission (V3, V5) peut être commandé par l'intermédiaire du moteur électrique (EM) par superposition par générateur ou moteur dans les engrenages planétaires (PG1, PG2), dans lequel le moteur à combustion interne (VKM) est raccordé par transmission via un premier arbre d'entrée (16) et un premier entraînement cylindrique (St1) aux deux engrenages planétaires (PG1, PG2) couplés l'un à l'autre montés en parallélisme axial et le moteur électrique (EM) est raccordé par transmission aux engrenages planétaires (PG1, PG2) via un second arbre d'entrée (20) à parallélisme axial, dans lequel les éléments de sortie sont commutés sous forme de supports (26, 30) des engrenages planétaires (PG1, PG2) sur l'arbre d'entraînement (12) commun, dans lequel l'arbre d'entraînement (12) est raccordé par transmission directement ou indirectement de manière stationnaire aux deux supports (26, 30) sous forme d'éléments de sortie des engrenages planétaires (PG1, PG2), dans lequel une roue extérieure (40) d'un second engrenage planétaire (PG2) des deux engrenages planétaires (PG1, PG2) est couplée directement via un second entraînement cylindrique (St2) à l'arbre d'entrée (16) du moteur à combustion interne (VKM), et dans lequel la roue extérieure (32) d'un premier engrenage planétaire (PG1) des deux engrenages planétaires (PG1, PG2) peut être fixée sur un frein (B1), **caractérisé en ce que** six rapports de marche avant (V1 à V6) en mode de moteur à combustion interne et trois rapports de marche avant (E1 à E3) en mode électromoteur peuvent être commutés par des premiers à des troisièmes embrayages (K1, K2, K3) et les freins (B1), **en ce qu'**un pignon planétaire (34) du second engrenage planétaire (PG2) peut être couplé à une roue extérieure (32) du premier engrenage planétaire (PG1) via le premier embrayage (K1), et **en ce que** la roue extérieure (32) du premier engrenage planétaire (PG1) peut être couplée via le troisième embrayage (K3) au premier entraînement cylindrique (St1).

2. Dispositif d'entraînement moteur selon la revendication 1, **caractérisé en ce que** les trois rapports de marche avant (E1 à E3) en mode électromoteur sont commutables indépendamment de l'entraînement primaire, et **en ce qu'**au moins un des trois rapports de marche avant (E1 à E3) commutables indépendamment de l'entraînement primaire est utilisable en tant que rapport de démarrage.

3. Dispositif d'entraînement moteur selon la revendication 1 ou 2, **caractérisé en ce qu'**en mode moteur à combustion par calage du moteur électrique (EM), des rapports de transmission fixes (V1 à V6) peuvent être également commandés.

4. Dispositif d'entraînement moteur selon la revendication 1, 2 ou 3, **caractérisé en ce qu**'un engrenage à au moins deux arbres (12, 16) est prévu avec les deux engrenages planétaires (PG1, PG2) conçus sous forme d'engrenages planétaires à trois arbres, et en ce que les arbres cumulés, en particulier les supports (20, 30) des deux engrenages planétaires à trois arbres (PG1, PG2), sont couplés.

5. Dispositif d'entraînement moteur selon l'une quelconque des revendications 1 à 4, **caractérisé en ce qu**'un pignon planétaire (22) du premier engrenage planétaire (PG1) est raccordé par transmission directement ou indirectement via le second arbre d'entrée (20) au moteur électrique (EM).

6. Dispositif d'entraînement moteur selon la revendication 5, **caractérisé en ce que** le pignon planétaire (22) du premier engrenage planétaire (PG1) peut être couplé par le second embrayage (K2) au support (26) du premier engrenage planétaire (PG1).

7. Dispositif d'entraînement moteur selon la revendication 5, **caractérisé en ce que** le moteur électrique (EM) est commuté sur le second arbre d'entrée via un autre entraînement cylindrique (StEM).

8. Dispositif d'entraînement moteur selon l'une quelconque des revendications 5 ou 6, **caractérisé en ce que** le moteur électrique (EM) présente une conception annulaire et est agencé radialement autour des deux engrenages planétaires (PG1, PG2), dans lequel leur rotor (44) dérive directement sur le second arbre d'entrée (20) via un joint à bride (46).

9. Dispositif d'entraînement moteur selon l'une quelconque des revendications précédentes, **caractérisé en ce que** le moteur à combustion (VKM) peut être raccordé par transmission au premier arbre d'entrée (16) via un embrayage de démarrage (K0) et éventuellement via un amortisseur de vibrations torsionnelles (ZMS).

10. Dispositif d'entraînement moteur selon la revendication 9, **caractérisé en ce que** l'embrayage de démarrage (KO), le troisième embrayage (K3) et les freins (B1) sont positionnés d'un côté des deux engrenages planétaires (PG1, PG2) et de l'autre embrayage (K2) d'un autre côté.

11. Dispositif d'entraînement moteur selon l'une quelconque des revendications précédentes, **caractérisé en ce que** l'arbre d'entraînement (12) présente une conception d'arbre creux qui dérive sur un différentiel interaxial (MD) dont les arbres de sortie (50, 52) peuvent être raccordés par transmission à un différentiel axial avant et arrière du véhicule automobile.
